# FASCICULE DE BREVET EUROPEEN

(11) **EP 2 532 068 B1**
(45) Date de publication et mention de la délivrance du brevet: **13.08.2014**
(21) Numéro de dépôt: 11702059.4
(22) Date de dépôt: 04.02.2011
(51) Int. Cl.: H02J 7/00, H01M 10/46

(54) **SYSTEME D'EQUILIBRAGE DE CHARGE POUR BATTERIES**
LADUNGSAUSGLEICH FÜR BATTERIEN
CHARGE EQUALIZATION SYSTEM FOR BATTERIES

(30) Priorité: 22.07.2010 FR 1003087; 21.07.2010 FR 1003071; 05.02.2010 FR 1000478
(43) Date de publication de la demande: 12.12.2012
(73) Titulaire: Commissariat à l'Énergie Atomique et aux Énergies Alternatives, 75015 Paris (FR)
(72) Inventeur: MERCIER, Sylvain, F-38120 Saint-Egrève (FR); CHATROUX, Daniel, F-38470 Têche (FR); DAUCHY, Julien, F-38160 Chatte (FR); FERNANDEZ, Eric, F-38760 Saint-Paul-de-Varces (FR)
(74) Mandataire: Sogan, Gloria
(86) Numéro de dépôt international: PCT/EP2011/051691
(87) Numéro de publication internationale: WO 2011/095610

(56) Documents cités:
- US-A1- 2005 077 879
- US-A1- 2007 145 946
- US-A1- 2008 084 184
- US-A1- 2008 116 850

## Description

L'invention concerne un système d'équilibrage de charge pour batteries d'accumulateurs électrochimiques, pouvant être utilisées notamment dans le domaine des transports électriques, hybrides et les systèmes embarqués. L'invention concerne en particulier les batteries de type lithium-ion (Li-ion) adaptées pour ce genre d'applications, du fait de leur possibilité de stocker une forte énergie avec une faible masse. L'invention est également applicable aux super-condensateurs.

Un accumulateur électrochimique a une tension nominale de l'ordre de quelques volts, et plus précisément 3.3 V pour les batteries Li-ion à base de phosphate de fer et 4.2 V pour une technologie Li-ion à base d'oxyde de cobalt. Si cette tension est trop faible par rapport aux exigences du système à alimenter, plusieurs accumulateurs sont placés en série. Il est également possible de disposer en parallèle de chaque accumulateur associé en série, un ou des accumulateurs en parallèle afin d'augmenter la capacité disponible et de fournir un courant et une puissance supérieurs. Les accumulateurs associés en parallèle forment ainsi un étage. Un étage est constitué au minimum d'un accumulateur. Les étages sont mis en série pour atteindre le niveau de tension désiré. L'association des accumulateurs est appelée une batterie d'accumulateurs.

La charge ou décharge d'un accumulateur se traduit respectivement par une croissance ou décroissance de la tension à ses bornes. On considère un accumulateur chargé ou déchargé lorsque celui-ci a atteint un niveau de tension défini par le processus électrochimique. Dans un circuit utilisant plusieurs étages d'accumulateurs, le courant circulant à travers les étages est le même. Le niveau de charge ou de décharge des étages dépend donc des caractéristiques intrinsèques des accumulateurs, à savoir la capacité intrinsèque et les résistances internes parasites séries et parallèles, de l'électrolyte ou de contact entre les électrodes et l'électrolyte. Des différences de tension entre les étages sont dès lors possibles du fait des disparités de fabrication et de vieillissement.

Pour un accumulateur de technologie Li-ion, une tension trop élevée ou trop faible, dite tension de seuil, peut endommager ou détruire ce dernier. Pour exemple, la surcharge d'un accumulateur Li-ion à base d'oxyde de cobalt, peut entraîner son emballement thermique et un départ de feu. Pour un accumulateur Li-ion à base de phosphate de fer, une surcharge se traduit par une décomposition de l'électrolyte qui diminue sa durée de vie ou peut détériorer l'accumulateur. Une décharge trop importante qui amène à une tension inférieure à 2 V, par exemple, entraîne principalement une oxydation du collecteur de courant de l'électrode négative lorsque celui-ci est en cuivre et donc une détérioration de l'accumulateur. En conséquence, la surveillance des tensions aux bornes de chaque étage d'accumulateurs est obligatoire lors de la charge et décharge pour une question de sécurité et de fiabilité. Un dispositif dit de surveillance en parallèle de chaque étage permet d'assurer cette fonction.

Le dispositif de surveillance a pour fonction de suivre l'état de charge et décharge de chaque étage d'accumulateurs et de transmettre l'information au circuit de contrôle afin d'arrêter la charge ou la décharge de la batterie lorsqu'un étage a atteint sa tension de seuil. Cependant, sur une batterie avec plusieurs étages d'accumulateurs disposés en série, si la charge est arrêtée lorsque l'étage le plus chargé atteint sa tension de seuil, les autres étages peuvent ne pas être totalement chargés. Inversement, si la décharge est arrêtée lorsque l'étage le plus déchargé atteint sa tension de seuil, les autres étages peuvent ne pas être totalement déchargés. La charge de chaque étage d'accumulateurs n'est dès lors pas exploitée de façon optimale, ce qui représente un problème majeur dans des applications de types transports et embarquées ayant de fortes contraintes d'autonomie. Pour pallier ce problème, le dispositif de surveillance est généralement associé à un dispositif d'équilibrage.

Le dispositif d'équilibrage a pour fonction d'optimiser la charge de la batterie et donc son autonomie en amenant les étages d'accumulateurs mis en série à un état de charge et/ou décharge identique. Il existe deux catégories de dispositifs d'équilibrage, les dispositifs d'équilibrage dits à dissipation d'énergie, ou dits à transfert d'énergie.

Avec les dispositifs d'équilibrage à dissipation d'énergie, la tension aux bornes des étages est uniformisée en détournant le courant de charge d'un ou des étages ayant atteint la tension de seuil et en dissipant l'énergie dans une résistance. En variante, la tension aux bornes des étages est uniformisée en déchargeant un ou des étages ayant atteint la tension de seuil. Cependant, de tels dispositifs d'équilibrage à dissipation d'énergie présentent l'inconvénient majeur de consommer plus d'énergie que nécessaire pour charger la batterie. En effet, ce circuit oblige à décharger plusieurs accumulateurs ou dériver le courant de charge de plusieurs accumulateurs pour que le ou les derniers accumulateurs un peu moins chargés terminent leur charge. L'énergie dissipée peut donc être très supérieure à l'énergie de ou des charges devant être terminées. De plus, ils dissipent l'énergie excédentaire en chaleur, ce qui n'est pas compatible avec les contraintes d'intégration dans les applications de types transport et embarquées, et le fait que la durée de vie des accumulateurs baisse fortement lorsque la température s'élève.

Les dispositifs d'équilibrage à transfert d'énergie échangent de l'énergie entre la batterie d'accumulateurs ou un réseau auxiliaire d'énergie et les étages d'accumulateurs.

On connaît par exemple du brevet US5659237 un dispositif permettant le transfert d'énergie du réseau auxiliaire à des étages par une structure « flyback » avec plusieurs sorties et utilisant une inductance couplée comme élément de stockage. Ce dernier est un composant spécifique car dédié à cette application. Le coût d'un tel composant est prohibitif par rapport à la fonction à remplir.

On connaît par ailleurs du brevet CN 1905259 un dispositif permettant le transfert d'énergie des étages à la batterie et qui utilise quant à lui une inductance par accumulateur comme élément de stockage. Cependant, ce dispositif n'opte pas pour un transfert d'énergie optimisé pour l'équilibrage des batteries dans les applications de types transports et embarquées. En effet, la fin de charge d'une batterie est déterminée par le dernier étage qui atteint la tension de seuil. Pour terminer la charge d'une batterie, l'énergie est prélevée sur un ou plusieurs étage(s) et elle est restituée à l'ensemble des étages. Lorsqu'un ou plusieurs étage(s) d'accumulateurs est ou sont un peu moins chargé(s), l'énergie n'est dès lors pas transférée en priorité à ce ou ces derniers qui en a ou ont besoin mais également à ou aux étages auxquels l'énergie est prélevée. L'équilibrage nécessite donc de prélever de l'énergie à l'ensemble des étages en fin de charge afin d'éviter de les charger à une tension trop élevée. L'équilibrage se fait donc à pertes élevées à cause du nombre de convertisseurs importants en fonctionnement. De plus, les accumulateurs déjà en fin de charge sont traversés par des composantes de courant alternatives ou continues non utiles.

L'invention a donc pour objectif de proposer un dispositif d'équilibrage amélioré ne présentant pas ces inconvénients de l'état de l'art de la technique.

À cet effet, l'invention a pour objet un système d'équilibrage pour batterie comprenant au moins deux étages d'accumulateurs mis en série, chaque étage d'accumulateurs comprenant au moins un accumulateur caractérisé en ce que ledit système comporte :
- au moins un générateur de tension comprenant au moins un pôle positif et au moins un pôle négatif,
- pour chaque étage d'accumulateurs un dispositif de charge associé alimenté par ledit au moins un générateur de tension et comprenant : au moins une inductance, au moins un premier condensateur dont la première extrémité est connectée audit pôle positif dudit au moins un générateur de tension, au moins un deuxième condensateur dont la première extrémité est connectée audit pôle négatif dudit générateur de tension, au moins une première diode connectée par son anode au pôle négatif dudit étage d'accumulateurs et par sa cathode à la deuxième extrémité dudit au moins un premier condensateur, au moins une deuxième diode connectée par son anode au pôle négatif de l'étage d'accumulateurs associé et par sa cathode à la deuxième extrémité dudit au moins un deuxième condensateur, au moins un interrupteur connecté directement ou indirectement par sa première extrémité à au moins une inductance et par sa deuxième extrémité au pôle positif de l'étage d'accumulateurs associé, et
- un dispositif de commande configuré pour contrôler ledit au moins un générateur de tension et pour fermer ledit au moins un interrupteur d'un dispositif de charge associé à un étage d'accumulateurs à charger, pour que ladite au moins une inductance emmagasine de l'énergie et pour transférer cette énergie audit étage d'accumulateurs associé.

Ledit système d'équilibrage peut en outre comporter une ou plusieurs caractéristiques suivantes, prises séparément ou en combinaison :
- ledit système comporte en outre : au moins une troisième diode connectée par sa cathode à la première extrémité de ladite inductance et par son anode à cathode de ladite au moins une première diode, et au moins une quatrième diode connectée par sa cathode à la première extrémité de ladite inductance et par son anode à cathode de ladite au moins une deuxième diode,
- ladite au moins une troisième diode est connectée à une première inductance et ladite au moins une quatrième diode est connectée à une deuxième inductance,
- ledit dispositif de charge comporte en outre : au moins une cinquième diode connectée par sa cathode à la première extrémité de ladite première inductance et par son anode au pôle négatif de l'étage d'accumulateurs associé, et au moins une sixième diode connectée par sa cathode à la première extrémité de ladite deuxième inductance et par son anode au pôle négatif de l'étage d'accumulateurs associé,
- ladite au moins une troisième diode et ladite au moins une quatrième diode sont connectés à une même inductance,
- ledit dispositif de charge comporte en outre au moins une cinquième diode connectée par sa cathode à la première extrémité de ladite inductance et par son anode au pôle négatif de l'étage d'accumulateurs associé,
- ledit dispositif de charge est configuré pour fonctionner en conduction discontinue, indépendamment des niveaux de tensions de l'étage d'accumulateurs associé et de la batterie pendant la phase de charge,
- les accumulateurs sont de type lithium-ion,
- la batterie comporte des super-condensateurs.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 représente un schéma synoptique d'une batterie comportant une mise en série d'étages d'accumulateurs et d'un système d'équilibrage de charge de la batterie comportant un dispositif de charge par étage d'accumulateurs et un générateur de tension,
- la figure 2 représente un schéma synoptique d'une variante du système d'équilibrage de la figure 1 comprenant un générateur de tension pour chaque dispositif de charge,
- la figure 3 représente un schéma synoptique d'une autre variante du système d'équilibrage de la figure 1 comprenant un générateur de tension par module élémentaire comportant un nombre prédéterminé d'étages d'accumulateurs mis en série,
- la figure 4 représente un schéma synoptique d'une autre variante du système d'équilibrage de la figure 3 comprenant un dispositif de charge supplémentaire par module élémentaire,
- la figure 5a illustre un schéma synoptique d'un premier mode de réalisation d'un dispositif de charge du système d'équilibrage,
- la figure 5b illustre un schéma synoptique d'une première variante de réalisation du dispositif de charge de la figure 5a,
- la figure 5c illustre un schéma synoptique d'une deuxième variante de réalisation du dispositif de charge de la figure 5a,
- la figure 6 illustre un schéma synoptique d'un exemple de réalisation d'un générateur de tension associé à un dispositif de charge des figures 5a à 5c, 11, 12, 13
- la figure 7 illustre un schéma synoptique d'une variante de réalisation du générateur de tension de la figure 6,
- la figure 8 est un schéma synoptique d'une deuxième variante de réalisation du générateur de tension de la figure 6, et
- la figure 9 est un schéma synoptique d'une troisième variante de réalisation du générateur de tension de la figure 6,
- la figure 10 est un diagramme représentant de façon schématique l'évolution des différents courants en fonction du temps dans le dispositif de charge des figures 5a, 5b, 5c,
- la figure 11 illustre un schéma synoptique d'un deuxième mode de réalisation d'un dispositif de charge du système d'équilibrage,
- la figure 12 illustre un schéma synoptique d'un troisième mode de réalisation d'un dispositif de charge du système d'équilibrage, et
- la figure 13 illustre un schéma synoptique d'un quatrième mode de réalisation d'un dispositif de charge du système d'équilibrage.

Dans ces figures, les éléments sensiblement identiques portent les mêmes références.

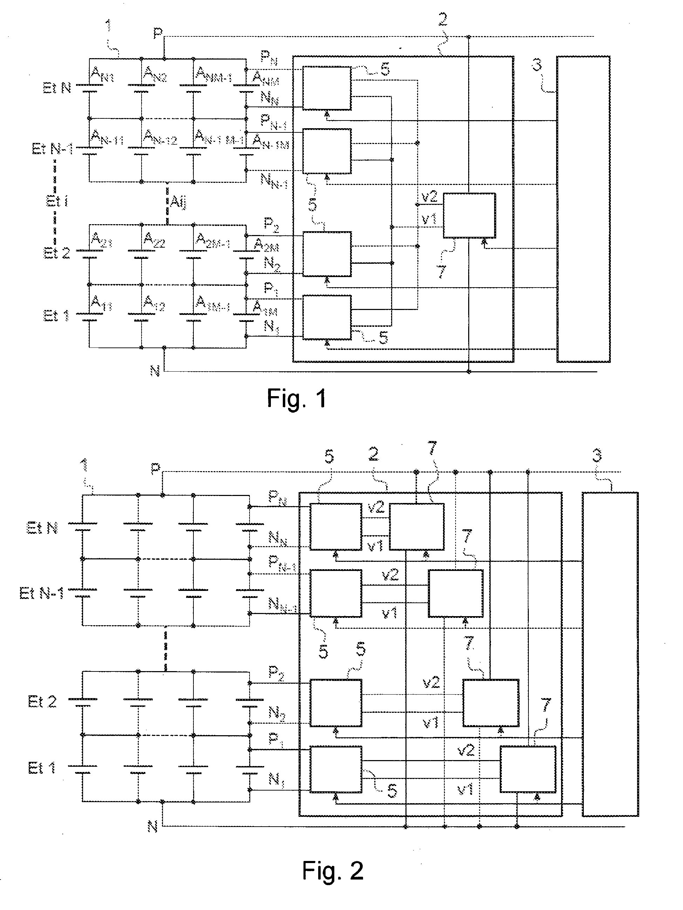

La figure 1 représente une batterie 1 d'accumulateurs. Cette batterie 1 est composée de N étages, notés Et;, connectés en série. Chaque étage Etᵢ est composé d'un accumulateur ou plusieurs accumulateurs Aᵢⱼ connectés en parallèle. L'indice i représente ici le numéro de l'étage, cet indice i varie dans l'exemple illustré sur la figure 1 de 1 à N, et l'indice j représente le numéro de chaque accumulateur dans un étage donné, cet indice j varie dans l'exemple illustré de 1 à M. Les bornes des accumulateurs Aᵢⱼ d'un même étage Etᵢ sont raccordées ensemble par l'intermédiaire de connexions électriques, tout comme chaque étage Etᵢ est également raccordé aux étages Et; adjacents par l'intermédiaire de connexions électriques.

L'invention a pour objet un système d'équilibrage de charge 2 pour une telle batterie 1 d'accumulateurs, comprenant au moins deux étages Et; mis en série.

Le système d'équilibrage 2 comporte de plus un dispositif de commande 3, une pluralité de dispositifs de charge 5 identiques respectivement associés à un étage d'accumulateur Et;, et un générateur de tension 7 (figure 1) ou plusieurs générateurs de tension 7 (figures 2, 3 et 4).

Les dispositifs de charge 5 et le ou les générateur(s) de tension 7 sont commandés par le dispositif de commande 3.

Le système d'équilibrage 2 peut comporter de plus un dispositif de mesure de tension (non représenté) pour mesurer la tension de chaque étage Et; et pour transférer une information de tension au dispositif de commande 3 qui peut à partir de cette information de tension déterminer si un étage d'accumulateur Etᵢ doit être chargé et commander en conséquence le dispositif de charge 5 en parallèle de l'étage d'accumulateurs ainsi que le générateur de tension 7 associé.

Les dispositifs de charge 5 sont connectés d'une part au pôle négatif, noté Nᵢ, et au pôle positif, noté Pᵢ, de chaque étage d'accumulateurs Et;, et d'autre part au pôle positif, noté v2, et au pôle négatif, noté v1, d'un ou plusieurs générateur(s) de tension 7.

Dans le cas d'un générateur de tension 7 unique (figure 1), ce dernier est connecté à l'ensemble des dispositifs de charge 5.

Dans le cas de générateurs de tension 7 multiples, chaque générateur de tension 7 est connecté à un dispositif de charge 5 si le nombre de générateurs de tension 7 est égal au nombre d'étages Etᵢ, comme illustré à titre d'exemple sur la figure 2.

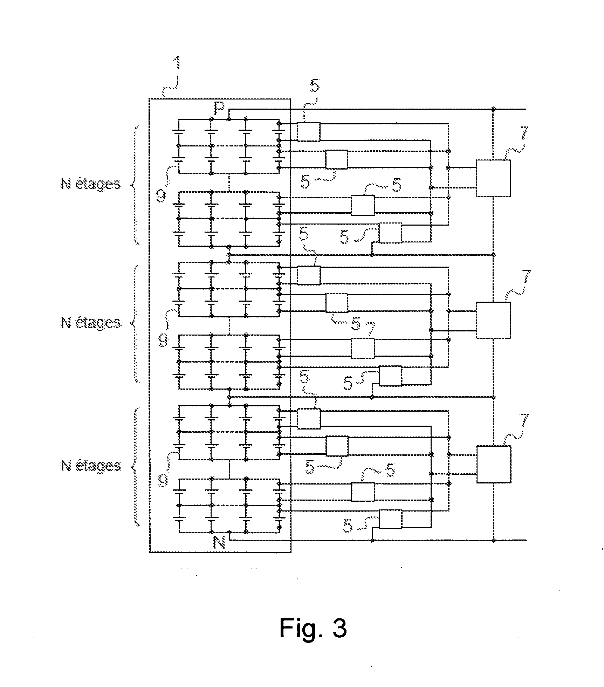

Selon une autre alternative représentée sur la figure 3, un générateur de tension 7 peut être connecté à plusieurs dispositifs de charge 5 si le nombre de générateurs de tension 7 est inférieur au nombre d'étages Et;.

À titre d'exemple, lorsqu'un nombre conséquent d'étages d'accumulateurs Et; en série est utilisé, comme c'est le cas pour les véhicules électriques avec par exemple cent accumulateurs en série, la batterie 1 peut être constituée d'une mise en série de modules élémentaires 9 (figure 3), comprenant par exemple chacun dix à douze étages d'accumulateurs Etᵢ mis en série. Ainsi, la connexion du ou des générateur(s) de tension 7 est faite aux bornes de dix à douze éléments. La tenue en tension des diodes et interrupteurs commandés est limitée, en fonction de la technologie de la batterie Li-ion, à environ 45 V - 60 V, qui est une valeur de tenue en tension standardisée dans le domaine du semi-conducteur. La maintenance d'un nombre conséquent de modules élémentaires 9, comme c'est le cas pour les véhicules électriques, est facilitée.

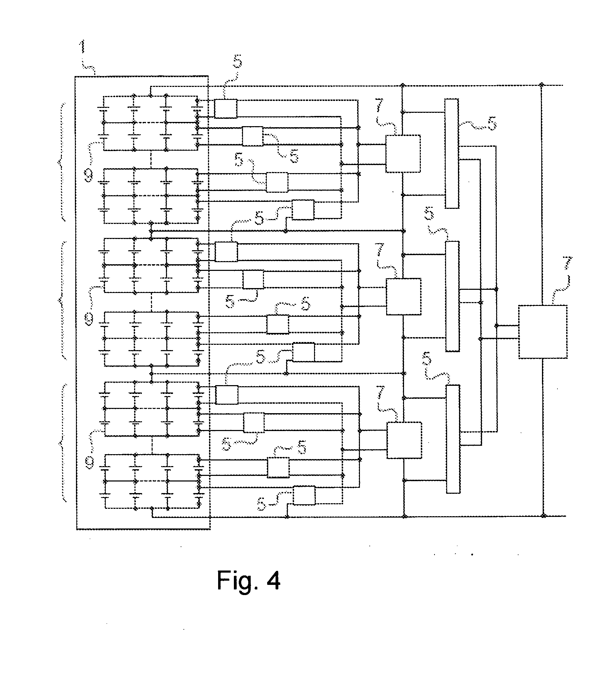

En outre, en plus des dispositifs de charge 5 par étages d'accumulateurs Et;, on peut utiliser des dispositifs de charge 5 identiques par mise en série de N étages, comme l'illustre la figure 4. Cette variante permet de transférer de l'énergie entre les N étages adjacents, et donc entre les modules élémentaires 9 associés en série. Dans ce cas, un ou des générateur(s) de tension 7 supplémentaire(s), est ou sont utilisé(s) pour fournir l'énergie aux dispositifs de charge 5 connectés aux bornes de N étages.

Le ou les générateur(s) de tension 7 fournit ou fournissent aux dispositifs de charge 5 des impulsions de tension de polarité(s) positive, négative ou positive et négative et de forme pouvant être variée, par exemple créneau ou sinusoïdale.

On décrit maintenant différents modes de réalisation du système d'équilibrage 2.

### Premier mode de réalisation :

### Dispositif de charge

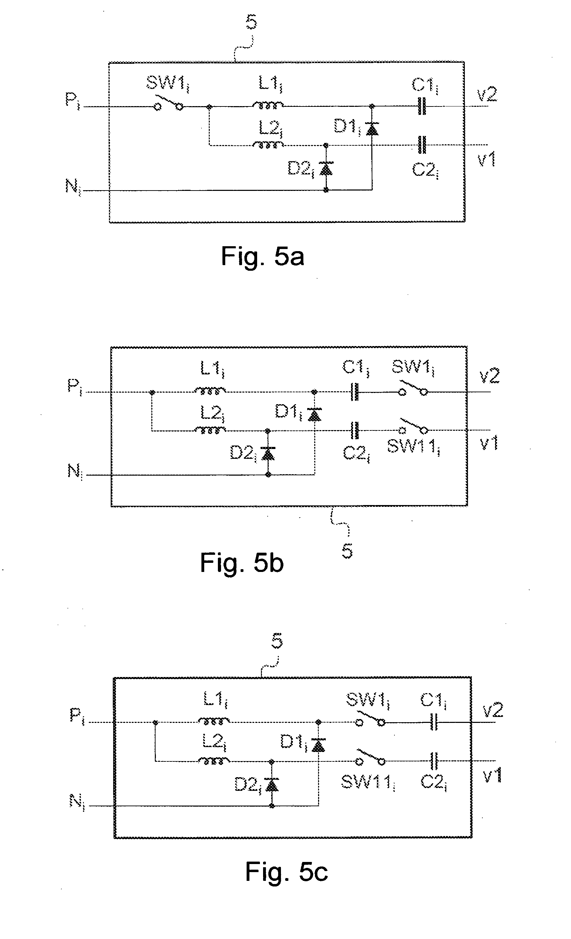

En se référant à la figure 5a, selon un premier mode de réalisation un dispositif de charge 5 comporte :
- une première inductance L1ᵢ,
- une deuxième inductance L2ᵢ
- un premier condensateur C1ᵢ dont la première extrémité est connectée au pôle v2 d'un générateur de tension 7 et la deuxième extrémité est connectée à la première extrémité de la première inductance L1ᵢ,
- un deuxième condensateur C2ᵢ dont la première extrémité est connectée au pôle v1 du générateur de tension 7 et la deuxième extrémité est connectée à la première extrémité de la deuxième inductance L2ᵢ,
- une première diode D1ᵢ dont l'anode et la cathode sont respectivement connectées au pôle Nᵢ de l'étage et à la deuxième extrémité du condensateur C1ᵢ,
- une deuxième diode D2ᵢ dont l'anode et la cathode sont respectivement connectées au pôle Ni de l'étage et à la première extrémité de la deuxième inductance L2ᵢ,
- un interrupteur SW1ᵢ, par exemple un transistor MOSFET, dont la première extrémité est connectée aux deuxièmes extrémités des deux inductances L1_{¡} et L2ᵢ et la deuxième extrémité au pôle Pᵢ de l'étage d'accumulateur.

Ce dispositif de charge 5 est adapté pour être utilisé avec un générateur de tension 7 fournissant un créneau de tensions positive et également négative.

Des variantes de position de l'interrupteur SW1ᵢ pour ce mode de réalisation du dispositif de charge 5 sont illustrées sur les figures 5b et 5c.

Sur la figure 5b, l'interrupteur SW1ᵢ est connecté par sa première extrémité au pôle positif v2 du générateur de tension 7 et par sa deuxième extrémité à la première extrémité du premier condensateur Clᵢ. Les deux inductances L1ᵢ et L2; sont alors connectées au pôle Pᵢ de l'étage d'accumulateur.

Sur la figure 5c, la première extrémité de l'interrupteur SW1ᵢ est connectée à la deuxième extrémité du premier condensateur C1ᵢ et sa deuxième extrémité est connectée à la cathode de la première diode D1ᵢ.

De plus comme on le constate sur ces figures 5b et 5c, un interrupteur supplémentaire SW11ᵢ doit être de plus connecté soit à la sortie v1 du générateur de tension 7 et à la première extrémité du deuxième condensateur C2; (figure 5b), soit à la deuxième extrémité du deuxième condensateur C2ᵢ et à la cathode de la deuxième diode D2; (figure 5c).

Ces deux autres positionnements possibles de l'interrupteur SW1ᵢ tels que représentés sur les figures 5b et 5c, permettent d'éviter lorsque l'interrupteur SW1ᵢ du dispositif de charge 5 est à l'état ouvert et que le générateur de tension 7 est commandé, que de l'énergie soit échangée entre les composants du générateur de tension 7 et du dispositif de charge 5.

Le dispositif de commande 3 permet de fermer et d'ouvrir l'interrupteur SW1ᵢ et/ou l'interrupteur SW11ᵢ quand il existe.

Un tel dispositif de charge 5 fonctionne aussi bien en régime de conduction continue que discontinue.

Le fonctionnement en régime de conduction discontinue est à privilégier car il présente l'avantage d'être plus facile de mise en oeuvre et de se faire à moindre coût.

En effet, en mode de conduction discontinue, le courant à travers l'inductance L1ᵢ s'annule par définition avant chaque période T de fonctionnement du dispositif de charge 5. La valeur du courant traversant l'inductance L1ᵢ lorsque le générateur de tension 7 fournit de l'énergie peut être déduite de la tension appliquée aux bornes de l'inductance L1ᵢ, du temps de stockage d'énergie dans l'inductance L1ᵢ et de la valeur de cette dernière. Suite à cela, la commande du générateur de tension 7 peut être faite par une commande à temps de conduction fixe.

Une autre variante de réalisation consiste à utiliser pour chaque dispositif de charge 5 un interrupteur commandé à la place de chaque diode. Un redressement dit de type synchrone est alors possible. Le rendement du dispositif de charge 5 peut être augmenté grâce à la diminution de la chute de tension à l'état passant du composant.

### Générateur de tension

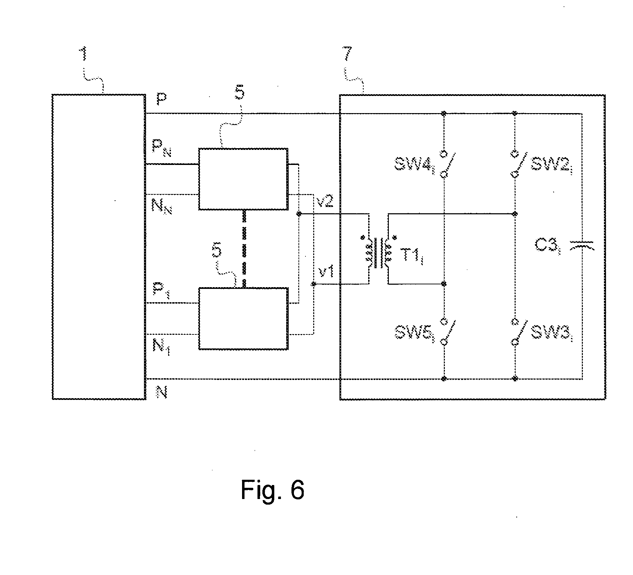

On a représenté sur les figures 6 à 9 différents modes de réalisation d'un générateur de tension 7 générant en sortie un créneau de tensions positive et négative.

Le générateur de tension 7 peut être connecté aux bornes d'un module élémentaire 9 mais également aux bornes de la batterie 1, voire aux bornes d'une source auxiliaire (12 V véhicule par exemple).

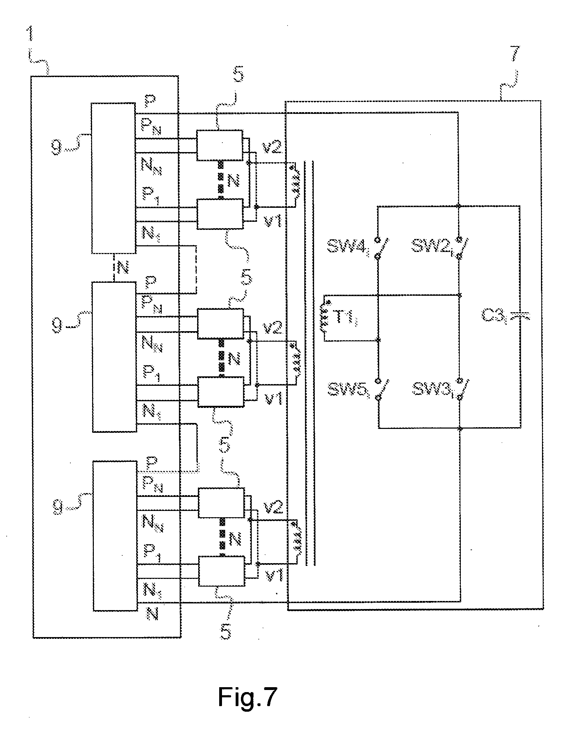

Un premier exemple de réalisation du générateur de tension consiste à utiliser un pont complet à quatre interrupteurs SW2ᵢ à SW5ᵢ et un transformateur Tlᵢ (figure 6) ou selon une variante du transformateur T1ᵢ illustrée par la figure 7. Selon cette variante, le transformateur T1ᵢ est constitué d'un enroulement primaire et de plusieurs enroulements secondaires.

L'utilisation de plusieurs enroulements secondaires permet de diminuer la tenue en tension des condensateurs des dispositifs de charge 5.

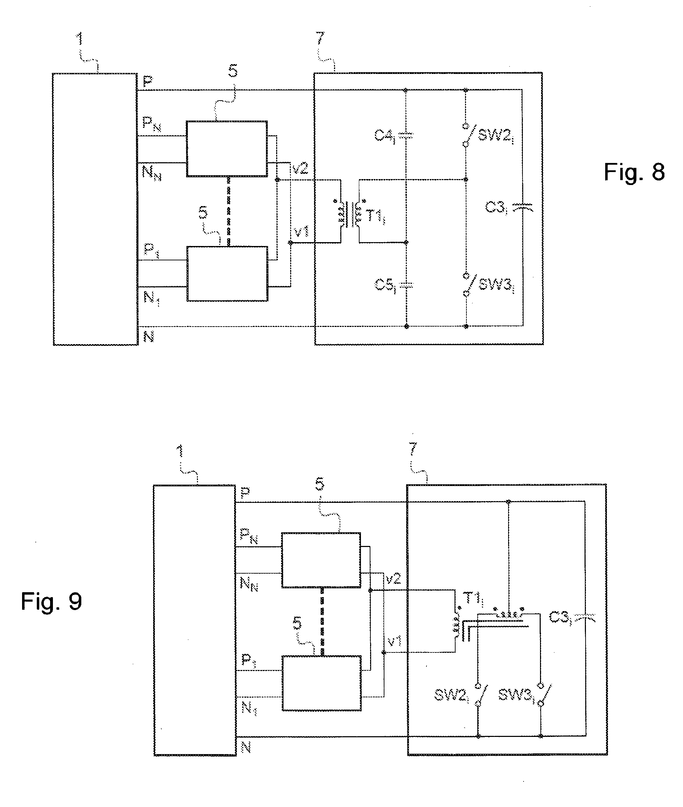

Un deuxième exemple de réalisation du générateur de tension 7 illustré sur la figure 8 consiste à utiliser un demi-pont à deux interrupteurs SW2ᵢ et SW3ᵢ, et un transformateur T1ᵢ dont le primaire est connecté entre les points milieux des deux interrupteurs SW2ᵢ et SW3ᵢ et de deux condensateurs C4; et C5ᵢ.

Le deuxième exemple de réalisation présente l'avantage d'avoir un nombre d'interrupteurs réduit par rapport au premier exemple, et également d'éviter tout risque de saturation du transformateur due à un déséquilibre de la séquence de commande des interrupteurs grâce aux condensateurs C4ᵢ et C5ᵢ en série avec l'enroulement primaire du transformateur T1ᵢ.

Un troisième exemple de réalisation du générateur de tension consiste à utiliser un transformateur T1ᵢ à point milieu au primaire et deux interrupteurs SW2ᵢ et SW3ᵢ (figure 9). Le troisième exemple de réalisation présente l'avantage d'une référence commune pour la commande des deux interrupteurs SW2ᵢ et SW3ᵢ.

Quel que soit le générateur de tension 7 utilisé, le temps de conduction des interrupteurs SW2ᵢ et SW3ᵢ est défini pour que chaque dispositif de charge 5 fonctionne en régime de conduction discontinue.

### Fonctionnement

Le fonctionnement du système d'équilibrage 2 comprenant un dispositif de charge 5 selon un premier mode de réalisation tel qu'illustré sur la figure 5a et un générateur de tension 7 selon la figure 8 est décrit ci-après.

Les dispositifs de charge 5 permettent de poursuivre la charge de certains étages en charge. Le fonctionnement du montage en régime de conduction discontinue est préféré pour les raisons décrites précédemment.

Par exemple, lorsque le dispositif de commande 3 commande le transfert d'énergie à un étage Etᵢ, par exemple à l'étage Et₁ l'interrupteur SW1₁ du dispositif de charge 5 en parallèle de l'étage Et₁ correspondant est fermé par le dispositif de commande 3.

Le générateur de tension 7, alimentant le dispositif de charge 5, est également activé par le dispositif de commande 3.

Les étages en série avec l'étage Et₁ ne sont pas chargés tant que l'interrupteur SW1ᵢ des dispositifs de charge 5 en parallèle de chaque étage reste à l'état ouvert.

Lorsqu'un dispositif de charge 5 est mis en fonctionnement et que le générateur de tension 7 fonctionnait au préalable, la vitesse de fermeture de l'interrupteur SW1ᵢ doit être contrôlée afin d'éviter de fournir un courant trop important à l'étage.

Les interrupteurs sont considérés comme parfaits lorsqu'ils sont à l'état bloqué et ne laissent donc passer aucun courant lorsqu'ils sont dans cet état.

En référence aux figures 5a, 8 et 10, pendant un temps de conduction t1, une tension positive est appliquée entre les bornes v2 et v1 du générateur de tension 7.

L'interrupteur SW2₁ est fermé et l'interrupteur SW3₁ est ouvert. Le générateur de tension 7 fournit donc un créneau de tension positive tant que l'interrupteur SW2₁ est fermé et que l'interrupteur SW3₁ est ouvert.

Pendant le temps t1, de l'énergie est emmagasinée dans l'inductance L1₁. Le courant à travers l'inductance L1₁ croît proportionnellement à la tension appliquée à ses bornes, égale approximativement à la tension du secondaire du transformateur T1₁ moins la tension de l'étage Et₁ en charge.

Le courant traverse uniquement l'étage Et₁.

Le courant à travers les condensateurs C1₁ et C2₁ du dispositif de charge 5 en fonctionnement est égal au courant à travers l'inductance L1₁. Les condensateurs C1₁ et C2₁ sont de valeur suffisamment importante afin de transmettre le courant nécessaire pour imposer une tension quasi-constante aux bornes des inductances L1₁ et L2₁.

Pendant ce temps t1, la deuxième diode D2₁ du dispositif de charge 5 conduit et la première diode D1₁ est bloquée.

Au bout du temps t1, l'interrupteur SW2₁ du générateur de tension 7 s'ouvre.

Le courant dans l'inductance L1₁ atteint à cet instant une valeur pic Ipic, égale approximativement à la tension appliquée aux bornes de l'inductance L1₁ lorsque le générateur de tension fournit de l'énergie, multipliée par t1 et divisée par la valeur de l'inductance L1₁. Cette formule est approximative dans la mesure où elle considère que le courant dans l'inductance est nul avant chaque période de fonctionnement du dispositif de charge 5.

Au bout du temps t1 et jusqu'à la moitié de la période de fonctionnement T/2, le générateur de tension 7 impose une tension nulle (figures 6 et 9) ou n'impose pas de tension (figure 8) aux bornes v2 et v1 du dispositif de charge 5 de l'étage Et₁. Les interrupteurs SW3₁ et SW2₁ sont ouverts. Le courant à travers l'inductance L1₁ décroît proportionnellement à la tension appliquée à ses bornes.

Pendant cette phase, la deuxième diode D2₁ est bloquée.

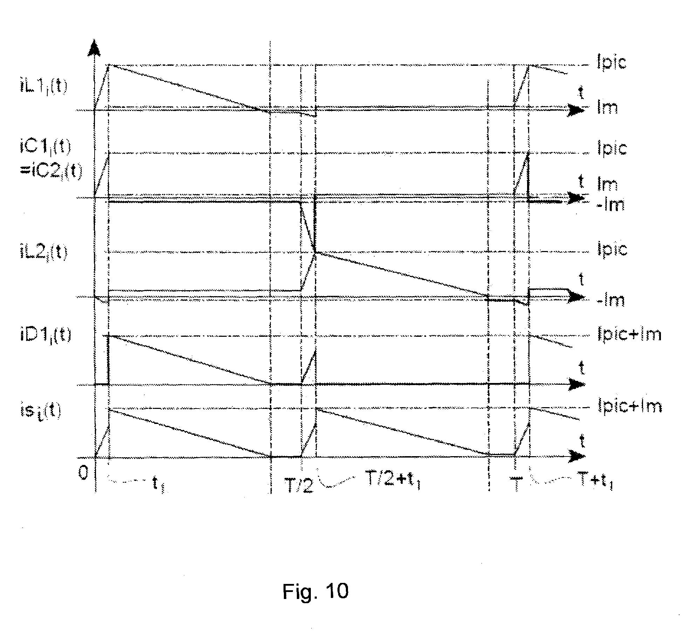

La première diode D1₁ est passante jusqu'à ce que la somme des courants à travers les inductances L1₁ et L2₁ s'annule. La première diode D1₁ conduit donc le courant à travers l'inductance L1₁ et également le courant à travers l'inductance L2₁. Le courant à travers l'inductance L2₁ est considéré constant durant cette phase dans la mesure où l'impédance du secondaire du transformateur est considérée nettement supérieure à l'impédance des inductances L1₁ et L2₁. Le courant à travers l'inductance L2₁ est égal au courant de magnétisation du transformateur. Il est noté Im sur la figure 10.

Lorsque la première diode D1₁ se bloque, le courant à travers l'inductance L2₁ ne traverse plus l'étage mais est égal à l'opposé du courant à travers l'inductance L1₁.

Au bout de la demi période T/2 et jusqu'à la fin du temps T/2 plus le temps t1, une tension négative est appliquée entre les bornes v2 et v1 du générateur de tension. L'interrupteur SW3₁ est fermé et l'interrupteur SW2₁ est ouvert. De l'énergie est emmagasinée dans l'inductance L2₁. Le courant à travers l'inductance L2₁ croît proportionnellement à la tension appliquée à ses bornes. Le courant traverse uniquement l'étage Et₁ en charge. Le courant à travers les condensateurs C1₁ et C2₁ du dispositif de charge en fonctionnement est égal au courant à travers l'inductance L2₁.

Pendant cette phase, la première diode D1₁ conduit. La deuxième diode D2₁ est bloquée.

Au bout du temps T/2 plus t₁, l'interrupteur SW3₁ s'ouvre. Le courant dans l'inductance L2₁ atteint à cet instant une valeur pic Ipic, égale approximativement à la tension appliquée aux bornes de l'inductance L2₁ lorsque le générateur de tension 7 fournit de l'énergie, multipliée par t1 et divisée par la valeur de l'inductance. Comme précédemment, cette formule est approximative dans la mesure où elle considère que le courant dans l'inductance est nul avant chaque période de fonctionnement du dispositif de charge 5.

Au bout du temps T/2 plus t1 jusqu'à la fin de la période T, le générateur de tension 7 n'impose pas de tension aux bornes v2 et v1 du dispositif de charge 5 de l'étage Et₁. Les interrupteurs SW3₁ et SW2₁ sont ouverts. Le courant à travers l'inductance L2₁ décroît proportionnellement à la tension appliquée à ses bornes.

Pendant cette phase, la première diode D1₁ est bloquée.

La deuxième diode D2₁ est passante jusqu'à ce que la somme des courants à travers les inductances L1₁ et L2₁ en charge s'annule. La deuxième diode D2₁ conduit le courant à travers l'inductance L2₁ et également le courant à travers l'inductance L 1₁. Le courant à travers l'inductance L1₁ est égal au courant de magnétisation (Im) du transformateur.

Lorsque la deuxième diode D2₁ se bloque, le courant à travers l'inductance L1₁ ne traverse plus l'étage mais est égal à l'opposé du courant à travers l'inductance L2₁.

À la fin de la période T, une nouvelle séquence de fonctionnement commence si l'interrupteur SW1₁ est toujours à l'état fermé. Le générateur de tension 7 est commandé de manière à ne pas avoir les deux interrupteurs SW2₁ et SW3₁ passants en même temps afin d'éviter un court-circuit de la batterie.

### Deuxième mode de réalisation :

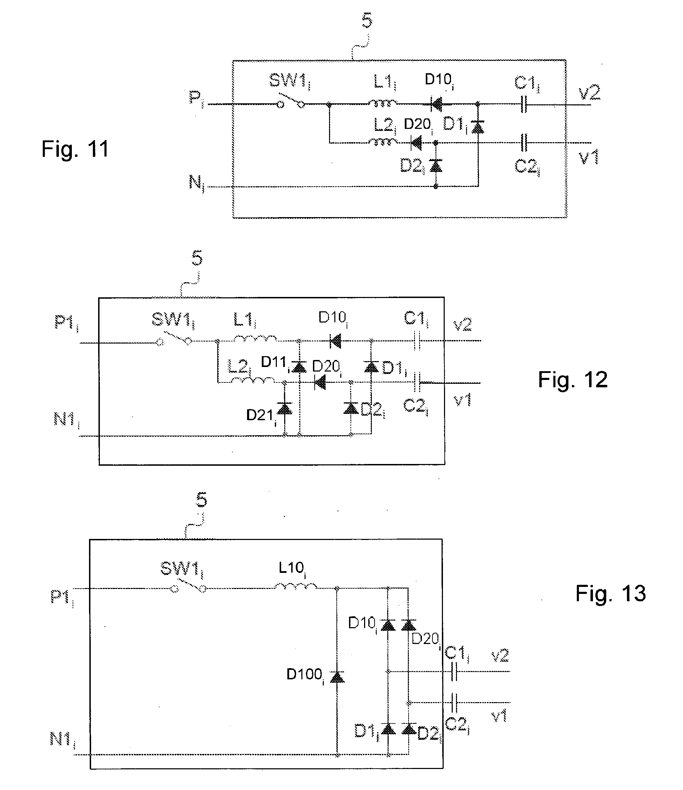

Selon un deuxième mode de réalisation illustré sur la figure 11, le dispositif de charge 5 comporte en outre :
- une troisième diode D10ᵢ montée en série avec la première inductance Llᵢ, connectée par sa cathode à la première extrémité de la première inductance L1ᵢ et par son anode à la cathode de la première diode D1ᵢ, et
- une quatrième diode D20ᵢ montée en série avec la deuxième inductance L2;, connectée par sa cathode à la première extrémité de la deuxième inductance L2ᵢ et par son anode à la cathode de la deuxième diode D2ᵢ.

Le fonctionnement du système d'équilibrage 2 avec un dispositif de charge 5 selon le deuxième mode de réalisation est sensiblement identique au fonctionnement du premier mode de réalisation.

Cependant, lorsque la première inductance L1ᵢ emmagasine de l'énergie pendant la durée t1, la deuxième diode D2ᵢ étant passante et la première diode D1ᵢ bloquée, la quatrième diode D20ᵢ montée en série avec la deuxième inductance L2ᵢ est également bloquée de manière à empêcher que du courant transite dans la deuxième inductance L2ᵢ.

De même, lorsque c'est la deuxième inductance L2ᵢ qui emmagasine de l'énergie, la première diode D1ᵢ étant passante et la deuxième diode D2ᵢ bloquée, la troisième diode D10ᵢ montée en série avec la première inductance L1ᵢ est également bloquée de manière à empêcher que du courant transite dans la première inductance L1ᵢ.

On évite ainsi l'apparition d'une surtension aux bornes de l'inductance L1ᵢ ou L2; lorsque respectivement l'interrupteur SW3₁ ou SW2₁ s'ouvre.

### Troisième mode de réalisation :

Selon un troisième mode de réalisation illustré sur la figure 12, le dispositif de charge 5 comporte en plus par rapport au deuxième mode de réalisation :
- une cinquième diode D11ᵢ connectée par sa cathode à la première extrémité de la première inductance L1ᵢ et à la cathode de la troisième diode D10ᵢ, et par son anode au pôle négatif Nᵢ de l'étage d'accumulateurs associé, et
- une sixième diode D21ᵢ connectée par sa cathode à la première extrémité de la deuxième inductance L2ᵢ et à la cathode de la quatrième diode D20ᵢ, et par son anode au pôle négatif Nᵢ de l'étage d'accumulateurs associé.

Le fonctionnement du système d'équilibrage 2 avec un dispositif de charge 5 selon le troisième mode de réalisation est identique au fonctionnement du deuxième mode de réalisation. Cependant, les cinquième D11ᵢ et sixième D21ᵢ diodes permettent d'obtenir un rendement du transfert d'énergie augmenté par rapport au deuxième mode de réalisation du fait qu'il ne dépend plus que d'un seul seuil de diode D11ᵢ ou D21; au lieu de deux seuils de diodes D1ᵢ et D10ᵢ ou D2; et D20ᵢ comme dans le deuxième mode de réalisation lorsque le courant à travers les inductances L1ᵢ,L2ᵢ décroît. On minimise ainsi les pertes dues aux diodes durant la phase de roue libre de l'instant t1 à l'instant ou le courant s'annule à travers l'inductance, donc durant la phase qui dure le plus longtemps.

### Quatrième mode de réalisation :

Enfin, selon un quatrième mode de réalisation illustré sur la figure 13, le dispositif de charge 5 diffère du troisième mode de réalisation, par le fait qu'il n'y a plus qu'une seule inductance L10ᵢ et non plus une première L1ᵢ et une deuxième L2ᵢ inductances tel que décrit précédemment.

Plus précisément, cette inductance L10ᵢ correspond aux deux inductances L1ᵢ et L2ᵢ des précédents modes de réalisation dont les premières extrémités sont connectées ensemble. Les inductances L1ᵢ et L2ᵢ dorénavant connectées en parallèle sont remplacées par une inductance unique L10ᵢ.

Le fonctionnement du système d'équilibrage 2 avec un dispositif de charge 5 selon le quatrième mode de réalisation est identique au fonctionnement selon le troisième mode de réalisation à la différence près que, quelle que soit la polarité de la tension de sortie du générateur de tension 7, une seule inductance L10ᵢ emmagasine de l'énergie durant le temps t1, la continuité du courant à travers l'inductance L10ᵢ est assurée par une seule diode D100ᵢ lorsque le générateur de tension 7 impose une tension nulle ou n'impose pas de tension à l'entrée du transformateur T1ᵢ. Cette diode D100ᵢ correspond par analogie au troisième mode de réalisation aux cinquième D11₁ et sixième D21₁ diodes connectées en parallèle.

Ceci permet de réduire le nombre de composants en assurant un rendement de transfert d'énergie similaire au troisième mode de réalisation.

## Revendications

1. Système d'équilibrage pour batterie comprenant au moins deux étages d'accumulateurs (Etᵢ) mis en série, chaque étage d'accumulateurs (Etᵢ) comprenant au moins un accumulateur (Aᵢⱼ) placé entre des pôles négatif (Ni) et positif (Pᵢ) de l'étage d'accumulateurs (Et;), **caractérisé en ce que** ledit système comporte :
- un générateur de tension (7) comprenant au moins une borne positive (v2) et une borne négative (v1),
- pour chaque étage d'accumulateurs (Etᵢ) un dispositif de charge (5) associé alimenté par le générateur de tension (7) et comprenant :
• au moins une inductance (L1ᵢ,L2ᵢ,L10ᵢ),
• un premier condensateur (C1ᵢ) dont la première extrémité est connectée à une borne (v2,v1) du générateur de tension (7) et dont la deuxième extrémité est reliée à une inductance associée (L1ᵢ, L10ᵢ),
• un deuxième condensateur (C2ᵢ) dont la première extrémité est connectée à une borne (v1,v2) du générateur de tension (7) et dont la deuxième extrémité est reliée à une inductance associée (L2ᵢ, L10ᵢ),
• une première diode (D1ᵢ) connectée par son anode au pôle négatif (Nᵢ) de l'étage d'accumulateurs associé et par sa cathode à la deuxième extrémité du premier condensateur (C1ᵢ),
• une deuxième diode (D2ᵢ) connectée par son anode au pôle négatif (Nᵢ) de l'étage d'accumulateurs associé et par sa cathode à la deuxième extrémité du deuxième condensateur (C2ᵢ),
• au moins une diode (D1ᵢ, D2ᵢ; D11ᵢ, D21ᵢ; D100ᵢ) éonnectée par son anode au pôle négatif (Nᵢ) dudit étage d'accumulateurs associé et connectée à une extrémité d'une inductance (L1ᵢ, L2ᵢ, L10ᵢ) associée, de façon à permettre lorsque la diode (D1ᵢ, D2ᵢ; D11ᵢ, D21ᵢ, D100ᵢ) est passante une circulation d'un courant de charge à travers l'étage d'accumulateurs associé, la diode (D1ᵢ, D2ᵢ; D11ᵢ, D21ᵢ; D100ᵢ) et l'inductance (L1ᵢ, L2ᵢ, L10ᵢ) associée ; et
• au moins un interrupteur (SW1ᵢ, SW11ᵢ) relié à une inductance (L1ᵢ,L2ᵢ,L10ᵢ) et relié à un pôle (Pᵢ) de l'étage d'accumulateurs associé, de sorte qu'un interrupteur (SW1ᵢ, SW11ᵢ), une inductance (L1ᵢ, L2ᵢ, L10ᵢ) et un condensateur (C1ᵢ, C2ᵢ) associés d'un dispositif de charge (5) sont connectés en série entre une borne (v2, v1) du générateur de tension (7) et un pôle de l'étage d'accumulateurs associé, et
- un dispositif de commande (3) configuré :
• pour pendant un temps de conduction appliquer une variation de tension entre les bornes (v2, v1) du générateur de tension (7) et pour fermer l'interrupteur (SW1ᵢ, SW11ᵢ) d'un dispositif de charge (5) associé à un étage d'accumulateurs (Et;) à charger, de sorte que l'inductance (L1ᵢ, L2ᵢ, L10ᵢ) et l'interrupteur (SW1ᵢ, SW11ᵢ) sont traversés par un courant d'alimentation croissant provenant du générateur de tension (7) et que l'inductance (L1ᵢ,L2ᵢ,L10ᵢ) associée emmagasine de l'énergie et
• pour au bout du temps de conduction, interrompre le courant d'alimentation à travers l'inductance associée (L1ᵢ, L2;, L10ᵢ) et permettre le transfert de l'énergie emmagasinée dans l'inductance (L1ᵢ,L2ᵢ,L10ᵢ) à l'étage d'accumulateurs (Etᵢ) associé par circulation d'un courant de charge décroissant à travers l'inductance (L1ᵢ, L2ᵢ, L10ᵢ) et la diode (D1ᵢ, D2ᵢ; D11ᵢ, D21ᵢ ; D100ᵢ) associée.

2. Système d'équilibrage pour batterie selon la revendication 1, **caractérisé en ce que** le générateur de tension (7) permet d'appliquer une tension positive ou négative entre ses bornes (v1, v2) et **en ce que** le dispositif de commande (3) est configuré pour :
- appliquer une tension positive pendant un premier temps de conduction et une tension négative pendant un deuxième temps de conduction, de sorte qu'un courant traverse les premier (Clᵢ) et deuxième (C2ᵢ) condensateurs dans un premier sens lors du premier temps de conduction et dans un deuxième sens, opposé au premier sens, lors du deuxième temps de conduction, et
- interrompre ledit courant d'alimentation entre le premier temps de conduction et le deuxième temps de conduction, de façon à permettre le transfert de l'énergie emmagasinée dans une inductance (L1ᵢ,L2ᵢ,L10ᵢ) à l'étage d'accumulateurs (Etᵢ) associé par circulation d'un courant de charge décroissant à travers l'inductance (L1ᵢ, L2ᵢ, L10ᵢ) et la diode (D1ᵢ, D2ᵢ; D11ᵢ, D21ᵢ; D100ᵢ) associée.

3. Système d'équilibrage pour batterie selon l'une des revendications 1 ou 2, **caractérisé en ce que** le premier condensateur (C1ᵢ) présente une première extrémité connectée à la borne positive (v2) du générateur de tension (7), et **en ce que** le deuxième condensateur (C2ᵢ) présente une première extrémité connectée à la borne négative (v1) du générateur de tension (7).

4. Système d'équilibrage pour batterie selon l'une quelconque des revendications précédentes, **caractérisé en ce que** l'interrupteur (SW1ᵢ) est connecté par sa première extrémité à au moins une inductance (L1ᵢ, L2ᵢ, L10ᵢ) et par sa deuxième extrémité au pôle positif (Pᵢ) de l'étage d'accumulateurs associé.

5. Système d'équilibrage pour batterie selon l'une quelconque des revendications précédentes, **caractérisé en ce que** le dispositif de commande (3) est configuré pour interrompre le courant d'alimentation à travers l'inductance (L1ᵢ, L2ᵢ, L10ᵢ) en imposant une tension nulle aux bornes du générateur de tension (7).

6. Système d'équilibrage pour batterie selon l'une quelconque des revendications précédentes, **caractérisé en ce que** :
- le dispositif de charge (5) comporte une première inductance (L1ᵢ) et une deuxième inductance (L2ᵢ), telles que :
• la première inductance (L1ᵢ) présente une première extrémité connectée à une deuxième extrémité du premier condensateur (C1ᵢ) et la cathode de la première diode (D1ᵢ),
• la deuxième inductance (L2ᵢ) présente une première extrémité connectée à une deuxième extrémité du deuxième condensateur (C2ᵢ) et la cathode de la deuxième diode (D2ᵢ), et **en ce que** :
- le dispositif de charge (5) comporte un interrupteur commun (SW1ᵢ) connecté aux deux inductances (L1ᵢ) et (L2ᵢ) ou un premier interrupteur (SW1ᵢ) connecté à la première inductance (Llᵢ) et un deuxième interrupteur (SW11ᵢ) connecté à la deuxième inductance (L2ᵢ).

7. Système d'équilibrage pour batterie selon la revendication 6, **caractérisé en ce que** la première diode (D1ᵢ) est connectée par son anode au pôle négatif (Nᵢ) de l'étage d'accumulateurs associé et par sa cathode à la deuxième extrémité du premier condensateur (C1ᵢ) et à une extrémité de la première inductance (L1ᵢ), de façon à permettre lorsque la première diode (D1ᵢ) est passante une circulation d'un courant de charge à travers l'étage d'accumulateurs associé, la première diode (Dlᵢ) et la première inductance (L1ᵢ).

8. Système d'équilibrage pour batterie selon l'une des revendications 6 ou 7, **caractérisé en ce que** la deuxième diode (D2ᵢ) est connectée par son anode au pôle négatif (Ni) de l'étage d'accumulateurs associé et par sa cathode à la deuxième extrémité du deuxième condensateur (C2ᵢ) et à une extrémité de la deuxième inductance (L2ᵢ) associée, de façon à permettre lorsque la deuxième diode (D2ᵢ) est passante une circulation d'un courant de charge à travers l'étage d'accumulateurs associé, la deuxième diode (D2ᵢ) et la deuxième inductance (L2ᵢ).

9. Système d'équilibrage pour batterie selon l'une quelconque des revendications précédentes, **caractérisé en ce que** ledit système comporte en outre :
- au moins une troisième diode (D10ᵢ) connectée par sa cathode à la première extrémité d'une inductance (L1ᵢ,L10ᵢ) associée et par son anode à la cathode de la première diode (D1ᵢ), et
- au moins une quatrième diode (D20ᵢ) connectée par sa cathode à la première extrémité d'une inductance (L2ᵢ,L10ᵢ) associée et par son anode à la cathode de la deuxième diode (D2ᵢ).

10. Système d'équilibrage pour batterie selon les revendications 6 et 9, **caractérisé en ce que** la troisième diode (D10ᵢ) est connectée à la première inductance (L1ᵢ) et la quatrième diode (D20ᵢ) est connectée à la deuxième inductance (L2ᵢ).

11. Système d'équilibrage pour batterie selon la revendication 10, **caractérisé en ce que** ledit dispositif de charge (5) comporte en outre :
- une cinquième diode (D11ᵢ) connectée par sa cathode à la première extrémité de la première inductance (L1ᵢ) et par son anode au pôle négatif (Nᵢ) de l'étage d'accumulateurs associé, et
- une sixième diode (D21ᵢ) connectée par sa cathode à la première extrémité de la deuxième inductance (L2ᵢ) et par son anode au pôle négatif (Ni) de l'étage d'accumulateurs associé.

12. Système d'équilibrage pour batterie selon la revendication 9, **caractérisé en ce que** la troisième diode (D10ᵢ) et la quatrième diode (D20ᵢ) sont connectés à une même inductance (L10ᵢ).

13. Système d'équilibrage pour batterie selon la revendication 12, **caractérisé en ce que** ledit dispositif de charge (5) comporte en outre au moins une cinquième diode (D100ᵢ) connectée par sa cathode à la première extrémité de l'inductance (L10ᵢ) et par son anode au pôle négatif (Nᵢ) de l'étage d'accumulateurs associé.

14. Système d'équilibrage pour batterie selon l'une quelconque des revendications précédentes, **caractérisé en ce que** ledit dispositif de charge (5) est configuré pour fonctionner en conduction discontinue, indépendamment des niveaux de tensions de l'étage d'accumulateurs associé (Et;) et de la batterie (1) pendant la phase de charge.

15. Système d'équilibrage pour batterie selon l'une quelconque des revendications précédentes, **caractérisé en ce que** les accumulateurs (Aᵢⱼ) sont de type lithium-ion ou **en ce que** la batterie comporte des super-condensateurs.

## Patentansprüche

1. Ausgleichssystem für eine Batterie, welches wenigstens zwei Etagen in Reihe angeordneter Akkumulatoren (Etᵢ) umfasst, wobei jede Akkumulatorenetage (Etᵢ) wenigstens einen Akkumulator (Aᵢⱼ) umfasst, der zwischen dem negativen (Nᵢ) und positiven (Pᵢ) Pol der Akkumulatorenetage (Etᵢ) platziert ist, **dadurch gekennzeichnet, dass** das System aufweist:
- einen Spannungsgenerator (7), der wenigstens einen positiven Anschlusspunkt (v2) und einen negativen Anschlusspunkt (v1) aufweist,
- für jede Akkumulatorenetage (Etᵢ) eine zugeordnete Ladevorrichtung (5), die von dem Spannungserzeuger (7) gespeist ist und umfasst:
• wenigstens einen Induktor (L1ᵢ, L2ᵢ, L10ᵢ),
• einen ersten Kondensator (C1ᵢ), dessen erstes Ende mit einem Anschlusspunkt (v2, v1) des Spannungsgenerators (7) verbunden ist und dessen zweites Ende mit einem zugeordneten Induktor (L1ᵢ, L10ᵢ) verbunden ist,
• einen zweiten Kondensator (C2ᵢ), dessen erstes Ende mit einem Anschlusspunkt (v1, v2) des Spannungsgenerators (7) verbunden ist und dessen zweites Ende mit einem zugeordneten Induktor (L2ᵢ, L10ᵢ) verbunden ist,
• eine erste Diode (D1ᵢ), die an ihrer Anode mit dem negativen Pol (Nᵢ) der zugeordneten Akkumulatorenetage und an ihrer Kathode mit dem zweiten Ende des ersten Kondensators (C1ᵢ) verbunden ist,
• eine zweite Diode (D2ᵢ), die an ihrer Anode mit dem negativen Pol (Nᵢ) der zugeordneten Akkumulatorenetage und an ihrer Kathode mit dem zweiten Ende des zweiten Kondensators (C2ᵢ) verbunden ist,
• wenigstens eine Diode (D1ᵢ, D2ᵢ; D11ᵢ, D21ᵢ; D100ᵢ), die an ihrer Anode mit dem negativen Pol (Nᵢ) der zugeordneten Akkumulatorenetage verbunden ist und an einem Ende eines zugeordneten Induktors (L1ᵢ, L2ᵢ, L10ᵢ) verbunden ist, um bei durchlässiger Diode (D1ᵢ, D2ᵢ; D11ᵢ, D21ᵢ;D100ᵢ) die Zirkulation eines Ladestroms durch die zugeordnete Akkumulatorenetage, die Diode (D1ᵢ, D2ᵢ; D11ᵢ, D21ᵢ; D100ᵢ) und den zugeordneten Induktor (L1ᵢ, L2ᵢ, L10ᵢ) zu ermöglichen; und
• wenigstens einen mit einem Induktor (L1ᵢ, L2ᵢ, L10ᵢ) und einem Pol (Nᵢ) der zugeordneten Akkumulatorenetage verbundenen Unterbrecher (SW1ᵢ, SW11ᵢ,), so dass ein zugeordneter Unterbrecher (SW1ᵢ, SW11ᵢ,), Induktor (L1ᵢ, L2ᵢ, L10ᵢ) und Kondensator (C1ᵢ, C2ᵢ) einer Ladevorrichtung (5) zwischen einem Anschlusspunkt (v2, v1) des Spannungsgenerators (7) und einem Pol der zugeordneten Akkumulatorenetage in Reihe verbunden sind, und
- eine Steuerungsvorrichtung (3), die dazu ausgebildet ist:
• während einer Stromführungszeit eine Spannungsvariation zwischen den Anschlusspunkten (v2, v1) des Spannungsgenerators (7) anzulegen und den Unterbrecher (SW1ᵢ, SW11ᵢ,) einer Ladevorrichtung (5), der einer zu ladenden Akkumulatorenetage (Etᵢ) zugeordnet ist, zu schließen, so dass der Induktor (L1ᵢ, L2ᵢ, L10ᵢ) und der Unterbrecher (SW1ᵢ, SW11ᵢ,) von einem von dem Spannungsgenerator (7) stammenden, zunehmenden Speisestrom durchflossen sind, und so dass der zugeordnete Induktor (L1ᵢ, L2ᵢ, L10ᵢ) Energie speichert, und
• am Ende der Stromführungszeit den Speisestrom durch den zugeordneten Induktor (L1ᵢ, L2ᵢ, L10ᵢ) zu unterbrechen und die Übertragung der in dem Induktor (L1ᵢ, L2ᵢ, L10ᵢ) gespeicherten Energie auf die zugeordnete Akkumulatorenetage (Etᵢ) durch die Zirkulation eines abnehmenden Ladestroms durch den Induktor (L1ᵢ, L2ᵢ, L10ᵢ) und die zugeordnete Diode (D1ᵢ, D2ᵢ; D11ᵢ, D21ᵢ; D100ᵢ) zu ermöglichen.

2. Ausgleichssystem für eine Batterie nach Anspruch 1, **dadurch gekennzeichnet, dass** der Spannungsgenerator (7) ermöglicht, eine positive oder negative Spannung zwischen seinen Anschlusspunkten (v1, v2) anzulegen und dass die Steuerungsvorrichtung (3) dazu ausgebildet ist:
- eine positive Spannung während einer ersten Stromführungszeit und eine negative Spannung während einer zweiten Stromführungszeit anzulegen, so dass ein Strom den ersten (C1ᵢ) und zweiten (C2ᵢ) Kondensator während der ersten Stromführungszeit in einer ersten Richtung und während der zweiten Stromführungszeit in einer zweiten, zur ersten Richtung entgegengesetzten Richtung durchfließt, und
- den Speisestrom zwischen der ersten Stromführungszeit und der zweiten Stromführungszeit zu unterbrechen, um die Übertragung der in einem Induktor (L1ᵢ, L2ᵢ, L10ᵢ) in einer zugeordneten Akkumulatorenetage (Etᵢ) gespeicherten Energie durch die Zirkulation eines abnehmenden Ladestroms durch den Induktor (L1ᵢ, L2ᵢ, L10ᵢ) und die zugeordnete Diode (D1ᵢ, D2ᵢ; D11ᵢ, D21ᵢ; D100ᵢ) zu ermöglichen.

3. Ausgleichssystem für eine Batterie nach einem der Ansprüche 1 oder 2, **dadurch gekennzeichnet, dass** der erste Kondensator (C1ᵢ) ein erstes, mit dem positiven Anschlusspunkt (v2) des Spannungsgenerators (7) verbundenes Ende aufweist und dadurch, dass der zweite Kondensator (C2ᵢ) ein erstes, mit dem negativen Anschlusspunkt (v1) des Spannungsgenerators (7) verbundenes Ende aufweist.

4. Ausgleichssystem für eine Batterie nach einem der vorangehenden Ansprüche, **dadurch gekennzeichnet, dass** der Unterbrecher (SW1ᵢ) an seinem ersten Ende mit wenigstens einem Induktor (L1ᵢ, L2ᵢ, L10ᵢ) und an seinem zweiten Ende mit dem positiven Pol (Pᵢ) der zugeordneten Akkumulatorenetage verbunden ist.

5. Ausgleichssystem für eine Batterie nach einem der vorangehenden Ansprüche, **dadurch gekennzeichnet, dass** die Steuerungsvorrichtung (3) dazu ausgebildet ist, den Speisestrom durch den Induktor (L1ᵢ, L2ᵢ, L10ᵢ) dadurch zu unterbrechen, dass eine Nullspannung an die Anschlusspunkte des Spannungsgenerators (7) angelegt wird.

6. Ausgleichssystem für eine Batterie nach einem der vorangehenden Ansprüche, **dadurch gekennzeichnet, dass**:
- die Ladevorrichtung (5) einen ersten Induktor (L1ᵢ) und einen zweiten Induktor (L2ᵢ) umfasst, so dass:
• der erste Induktor (L1ᵢ) ein erstes Ende aufweist, das mit einem zweiten Ende des ersten Kondensators (C1ᵢ) und der Kathode der ersten Diode (D1ᵢ) verbunden ist,
• der zweite Induktor (L2ᵢ) ein erstes Ende aufweist, das mit einem zweiten Ende des zweiten Kondensators (C2ᵢ) und der Kathode der zweiten Diode (D2ᵢ) verbunden ist, und dadurch, dass
- die Ladevorrichtung (5) einen gemeinsamen, mit den beiden Induktoren (Llᵢ) und (L2ᵢ) verbundenenen Unterbrecher (SW1ᵢ), oder einen ersten, mit dem ersten Induktor (L1ᵢ) verbundenen Unterbrecher (SW1ᵢ) und einen zweiten, mit dem zweiten Induktor (L2ᵢ) verbundenen Unterbrecher (SW11ᵢ) aufweist.

7. Ausgleichssystem für eine Batterie nach Anspruch 6, **dadurch gekennzeichnet, dass** die erste Diode (D1ᵢ) an ihrer Anode mit dem negativen Pol (Nᵢ) der zugeordneten Akkumulatorenetage und an ihrer Kathode mit dem zweiten Ende des ersten Kondensators (C1ᵢ) und einem Ende des ersten Induktors (L1ᵢ) derart verbunden ist, dass bei durchlässiger erster Diode (D1ᵢ) eine Zirkulation eines Ladestroms durch die zugeordnete Akkumulatorenetage, die erste Diode (D1ᵢ) und den ersten Induktor (L1ᵢ) möglich ist.

8. Ausgleichssystem für eine Batterie nach einem der Ansprüche 6 oder 7, **dadurch gekennzeichnet, dass** die zweite Diode (D2ᵢ) an ihrer Anode mit dem negativen Pol (Nᵢ) der zugeordneten Akkumulatorenetage und an ihrer Kathode mit dem zweiten Ende des zweiten Kondensators (C2ᵢ) und einem Ende des zweiten Induktors (L2ᵢ) derart verbunden ist, dass bei durchlässiger zweiter Diode (D2ᵢ) eine Zirkulation eines Ladestroms durch die zugeordnete Akkumulatorenetage, die zweite Diode (D2ᵢ) und den zweiten Induktor (L2ᵢ) möglich ist.

9. Ausgleichssystem für eine Batterie nach einem der vorangehenden Ansprüche, **dadurch gekennzeichnet, dass** das System ferner aufweist:
- wenigstens eine dritte Diode (D10ᵢ), die an ihrer Kathode mit dem ersten Ende eines zugeordneten Induktors (L1ᵢ, L10ᵢ) und an ihrer Anode mit der Kathode der ersten Diode (D1ᵢ) verbunden ist, und
- wenigstens eine vierte Diode (D20ᵢ), die an ihrer Kathode mit dem ersten Ende eines zugeordneten Induktors (L2ᵢ, L10ᵢ) und an ihrer Anode mit der Kathode der zweiten Diode (D2ᵢ) verbunden ist.

10. Ausgleichssystem für eine Batterie nach den Ansprüchen 6 und 9, **dadurch gekennzeichnet, dass** die dritte Diode (D10ᵢ) mit dem ersten Induktor (L1ᵢ) und die vierte Diode (D20ᵢ) mit dem zweiten Induktor (L2ᵢ) verbunden ist.

11. Ausgleichssystem für eine Batterie nach Anspruch 10, **dadurch gekennzeichnet, dass** die Ladevorrichtung (5) ferner aufweist:
- eine fünfte Diode (D11ᵢ), die an ihrer Kathode mit dem ersten Ende des ersten Induktors (L1ᵢ) und an ihrer Anode mit dem negativen Pol (Nᵢ) der zugeordneten Akkumulatorenetage verbunden ist, und
- eine sechste Diode (D21ᵢ), die an ihrer Kathode mit dem ersten Ende des zweiten Induktors (L2ᵢ) und an ihrer Anode mit dem negativen Pol (Nᵢ) der zugeordneten Akkumulatorenetage verbunden ist.

12. Ausgleichssystem für eine Batterie nach Anspruch 9, **dadurch gekennzeichnet, dass** die dritte Diode (D10ᵢ) und die vierte Diode (D20ᵢ) mit demselben ersten Induktor (L10_{;}) verbunden sind.

13. Ausgleichssystem für eine Batterie nach Anspruch 12, **dadurch gekennzeichnet, dass** die Ladevorrichtung (5) ferner wenigstens eine fünfte Diode (D100ᵢ) aufweist, die an ihrer Kathode mit dem ersten Ende des Induktors (L10ᵢ) und an ihrer Anode mit dem negativen Pol (Nᵢ) der zugeordneten Akkumulatorenetage verbunden ist.

14. Ausgleichssystem für eine Batterie nach einem der vorangehenden Ansprüche, **dadurch gekennzeichnet, dass** die Ladevorrichtung (5) dazu ausgebildet ist, während der Ladephase mit diskontinuierlicher Leitung unabhängig von den Spannungsniveaus der zugeordneten Akkumulatorenetage (Etᵢ) und der Batterie (1) zu funktionieren.

15. Ausgleichssystem für eine Batterie nach einem der vorangehenden Ansprüche, **dadurch gekennzeichnet, dass** die Akkumulatoren (Aᵢⱼ) vom Typ Lithium-Ionen sind oder dadurch, dass die Batterie Superkondensatoren aufweist.

## Claims

1. Battery equalization system comprising at least two accumulator stages (Et;) arranged in series, each accumulator stage (Etᵢ) comprising at least one accumulator (Aᵢⱼ) placed between the negative (Nᵢ) and positive (Pᵢ) poles of the accumulator stage (Et;), **characterized in that** said system comprises:
- a voltage generator (7) comprising at least one positive terminal (v2) and one negative terminal (v1)
- for each accumulator stage (Etᵢ) an associated charging device (5) powered by the voltage generator (7) and comprising:
• at least one inductor (L1ᵢ, L2ᵢ, L10ᵢ)
• a first capacitor (C1ᵢ) whose first end is connected to a terminal (v2, v1) of the voltage generator (7) and whose second end is connected to an associated inductor (L1ᵢ, L10ᵢ)
• a second capacitor (C2ᵢ) whose first end is connected to a terminal (v1, v2) of the voltage generator (7) and whose second end is connected to an associated inductor (L2ᵢ, L10ᵢ)
• a first diode (D1ᵢ) connected by its anode to the negative pole (Nᵢ) of the associated accumulator stage and with its cathode to the second end of the first capacitor (C1ᵢ)
• a second diode (D2ᵢ) connected by its anode to the negative pole (N;) of the associated accumulator stage and with its cathode to the second end of the second capacitor (C2ᵢ),
• at least one diode (D1ᵢ, D2ᵢ ; D11ᵢ, D21ᵢ ; D100ᵢ) connected by its anode to the negative pole (N;) of said associated accumulator stage and connected to one end of an associated inductor (L1ᵢ, L2ᵢ, L10ᵢ) so as to allow when the diode is passing (D1ᵢ, D2ᵢ ; D11ᵢ, D21ᵢ; D100ᵢ) a charging current to flow through the associated accumulator stage, the diode (D1ᵢ,D₂ᵢ ; D11_{i;}, D21ᵢ; D100i) and the associated inductor (L1ᵢ, L2ᵢ, L10ᵢ); and
• at least one switch (SW1ᵢ, SW11ᵢ) connected to an inductor (L1ᵢ, L2;, L10ᵢ) and connected to one pole (Pᵢ) of the associated accumulator stage, so that a switch (SW1ᵢ, SW11ᵢ), an inductor (L1ᵢ, L2ᵢ, L10ᵢ) and an associated capacitor (C1ᵢ, C2;) of a charging device (5) are connected in series between a terminal
(v2, v1) of the voltage generator (7) and a pole of the associated accumulator stage, and
- a control device (3) configured to:
• during a conduction time, apply a voltage variation between the terminals (v2, v1) of the voltage generator (7) and to close the switch (SW1ᵢ, SW11ᵢ) of a charging device (5) associated with an accumulator stage (Etᵢ) to be charged, such that the inductor (L1ᵢ, L2;, L10ᵢ) and the switch (SW1ᵢ, SW11ᵢ) are passed through by an increasing power supply current coming from the voltage generator (7) and the associated inductor (L1ᵢ, L2ᵢ, L10ᵢ) stores energy and
• at the end of the conduction time, to interrupt the power supply current through the associated inductor (L1ᵢ, L2ᵢ, L10ᵢ) and allow the transfer of the energy stored in the inductor (L1ᵢ, L2ᵢ, L10ᵢ) to the associated accumulator stage (Etᵢ) with the circulation of a decreasing charging current flow through the inductor (L1ᵢ, L2;, L10ᵢ) and the associated diode (D1ᵢ, D2;; D11ᵢ, D21ᵢ; D100ᵢ).

2. Battery equalization system according to claim 1, **characterized by** the fact that the voltage generator (7) allows to apply a positive or negative voltage between its terminals (v1, v2) and by the fact that the control device (3) is configured to:
- apply a positive voltage during a first conduction time and a negative voltage during a second conduction time, such that a current passes through the first (C1ᵢ) and second (C2ᵢ) capacitors in a first direction during the first conduction time and in a second direction, opposite to the first direction, during the second conduction time, and
- interrupt said power supply between the first and second conduction time in order to allow the transfer of the energy stored in an inductor (L1ᵢ, L2ᵢ, L10ᵢ) to the associated accumulator stage (Etᵢ) by the circulation of a decreasing charging current through the inductor (L1ᵢ, L2ᵢ, L10ᵢ) and associated diode (D1ᵢ, D2ᵢ; D11ᵢ, D21ᵢ; D100ᵢ).

3. Battery equalization system according to either claim 1 or 2, **characterized by** the fact that the first capacitor (C1ᵢ) has a first end connected to the positive terminal (v2) of the voltage generator (7), and in that the second capacitor (C2ᵢ) has a first end connected to the negative terminal (v1) of the voltage generator (7).

4. Battery equalization system according to any one of the previous claims, **characterized by** the fact that the switch (SW1ᵢ) is connected at its first end to at least one inductor (L1ᵢ, L2ᵢ, L10ᵢ) and at its second end to the positive pole (Pᵢ) of the associated accumulator stage.

5. Battery equalization system according to any one of the previous claims, **characterized by** the fact that the control device (3) is configured to interrupt the power supply current through the inductor (L1, L2;, L10ᵢ) by imposing a zero voltage at the terminals of the voltage generator (7).

6. Battery equalization system according to any one of the previous claims, **characterized by** the fact that:
- the charging device (5) comprises a first inductor (L1ᵢ) and a second inductor (L2ᵢ), such that:
• the first inductor (L1ᵢ) has a first end connected to a second end of the first capacitor (C1ᵢ) and the cathode of the first diode (D1ᵢ),
• the second inductor (L2ᵢ) has a first end connected to a second end of the second capacitor (C2ᵢ) and the cathode of the second diode (D2ᵢ), and by the fact that:
- the charging device (5) comprises a common switch (SW1ᵢ) connected to two inductors (L1ᵢ) and (L2ᵢ) or a first switch (SW1ᵢ) connected to the first inductor (L1ᵢ) and a second switch (SW11ᵢ) connected to the second inductor (L2ᵢ).

7. Battery equalization system according to claim 6, **characterized by** the fact that the first diode (D1ᵢ) is connected at its anode to the negative pole (N;) of the associated accumulator stage and with its cathode to the second end of the first capacitor (C1ᵢ) and to one end of the first inductor (L1ᵢ), so as to allow that, when the first diode (D1ᵢ) is passing a circulation of a charging current through the associated accumulator stage, the first diode (D1ᵢ) and the first inductor (L1ᵢ)_{.}

8. Battery equalization system according to either claim 6 or 7, **characterized by** the fact that the second diode (D2ᵢ) is connected with its anode to the negative pole (Nᵢ) of the associated accumulator stage and with its cathode to the second end of the second capacitor (C2ᵢ) and to one end of the associated second inductor (L2ᵢ) so to allow that, when the second diode (D2ᵢ) is passing, a circulation of a charging current through the associated accumulator stage, the second diode (D2ᵢ) and the second inductor (L2ᵢ).

9. Battery equalization system according to any of the previous claims, **characterized by** the fact that the said system further comprises:
- at least a third diode (D 10ᵢ) connected by its cathode to the first end of an associated inductor (L1ᵢ, L10ᵢ) and with its anode to the cathode of the first diode (D1ᵢ), and
- at least a fourth diode (D20ᵢ) connected by its cathode to the first end of an associated inductor (L2ᵢ, L10ᵢ) and with its anode to the cathode of the second diode (D2ᵢ).

10. Battery equalization system according to claims 6 and 9, **characterized by** the fact that the third diode (D10ᵢ) is connected to the first inductor (L1ᵢ) and the fourth diode (D20ᵢ) is connected to the second inductor (L2ᵢ).

11. Battery equalization system according to claim 10, **characterized by** the fact that said charging device (5) further comprises:
- a fifth diode (D11ᵢ) connected by its cathode to the first end of the first inductor (L1ᵢ) and by its anode to the negative pole (Nᵢ) of the associated accumulator stage, and
- a sixth diode (D21ᵢ) connected by its cathode to the first end of the second inductor (L2ᵢ) and by its anode to the negative pole (Nᵢ) of the associated accumulator stage.

12. Battery equalization system according to claim 9, **characterized by** the fact that the third diode (D10ᵢ) and the fourth diode (D20ᵢ) are connected to a same inductor (L10ᵢ).

13. Battery equalization system according to claim 12, **characterized by** the fact that said charging device (5) further comprises at least a fifth diode (D100ᵢ) connected by its cathode to the first end of the inductor (L10ᵢ) and by its anode to the negative pole (Nᵢ) of the associated accumulator stage.

14. Battery equalization system according to any one of the previous claims, **characterized by** the fact that said charging device (5) is configured to operate in discontinuous conduction, independently of the voltage levels of the associated accumulator stage (Etᵢ) and the battery (1) during the charging phase.

15. Battery equalization system according to any one of the previous claims, **characterized by** the fact that the accumulators (Aᵢⱼ) are lithium-ion accumulators or by the fact that the battery comprises supercapacitors.
